# EUROPEAN PATENT SPECIFICATION

(11) **EP 2 853 352 B1**
(45) Date of publication and mention of the grant of the patent: **22.03.2017**
(21) Application number: 14186808.3
(22) Date of filing: 29.09.2014
(51) Int. Cl.: B25F 1/00

(54) **A device for straightening cables**
Vorrichtung zum Begradigen von Kabeln
Dispositif de redressement de câbles

(30) Priority: 30.09.2013 GB 201317284
(43) Date of publication of application: 01.04.2015
(73) Proprietor: Woods, James, Southampton, Hampshire SO30 2NX (GB)
(72) Inventor: Woods, James, Southampton, Hampshire SO30 2NX (GB)
(74) Representative: D Young & Co LLP

(56) References cited:
- GB-A- 1 333 625
- US-A- 1 329 226
- US-A- 3 747 648
- US-A- 4 116 037
- US-A- 5 604 947

## Description

### Field of the Invention

The invention relates, in a non-limiting manner, to a device for straightening cables or pipes.

### Background to the Invention

Currently when fitting cables it is necessary to perform several steps. The first step is to determine a path along which the cables must pass. The second step is to fix the cable in place. This second step is a two step process. The first step is to anchor the cable to the wall (or other surface along which the cable will travel) using a U-shaped clip which is sometimes called a cable clip. The second step involves straightening the cable its path until a second anchor point is reached. Another U-shaped clip is then used to anchor the cable to the wall again.

The above mentioned step of straightening is typically performed using the thumb of the person installing the cable. This has a number of disadvantages. The first is that to straighten the cable, a large amount of force needs to be applied to the cable. This is especially the case with thick cable. This causes great discomfort to the installer especially around the thumb joint in the case of thick cables. The second disadvantage is that irrespective of the thickness of the cable, pressing hard on the cable using a thumb and then pushing the thumb along the length of the cable may cause friction burn on the user's thumb. This is painful.

It is an aim of embodiments of the present invention to address at least these problems.

GB 1333625A describes a prior art device.

### Summary of the Invention

According to a first aspect, there is provided a device for straightening cables according to Claim 1.

This arrangement enables a user to straighten cables with ease.

The cable straightening means may have a U-shaped cross section, wherein the U-shaped cross section is configured to locate the cable therein. This allows for easy engagement of the cable into the device.

The width of the U-shaped cross section may vary along at least part of the cable straightening means and is whose width tapers inwards towards the bend. This allows better engagement with the cable which is fed into the bend.

The device may comprise electrical insulation covering the handle and the cable straightening means. This reduces the risk of electrocution.

The electrical insulation may be thicker on the bend of the cable straightening means compared to the remainder of the cable straightening means. This allows for the fact that the bend will engage with the cable and will suffer most wear.

The electrical insulation may be PVC or nylon.

The width of the U-shaped cross section at the bend may be between 10-50mm. This accommodates most commercial cables.

The height of the U-shaped cross section is between 10-30mm. This accommodates most commercial cables.

The bend may be located towards the end of the handle. This allows the cable to be pushed into corners more easily.

The device may comprise a claw attached to the hammerhead.

The cable straightening means may be moulded into the handle.

The device may comprise a fastening means operable to engage with the handle to attach the device to the handle.

According to another aspect, there is provided a device for straightening pipes according to Claim 12.

### Brief Description of the Drawings

Embodiments of the present invention will be hereinafter described, by way of example only, with reference to the following representative drawings, in which:
Figure 1 shows a device according to one embodiment;
Figure 2 shows the device of Figure 1 in use;
Figure 3 shows a cross-section of the cable straightener engaging with a cable;
Figure 4 shows a device according to another embodiment; and
Figure 5 shows device according to a third embodiment.

### Description of Embodiments of the Invention

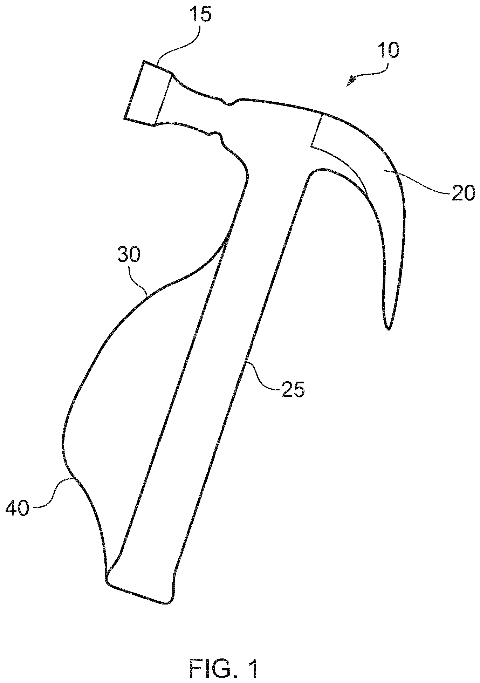

Referring to Figure 1 a device 10 according to embodiments of the present invention is shown. The device 10, in this embodiment, has a form factor similar to a claw hammer. Specifically, the device 10 has a hammer head 15 and an optional claw 20. The hammer head 15 is used to drive nails and the like into surfaces. In this particular case, the hammer head 15 may be used to drive the nail which fixes the U-shaped clip to the surface along which the cable is fixed. The claw 20 is used to remove nails incorrectly located in surfaces as will be appreciated by the skilled person. Additionally, the device 10 has a handle 25 which will be held by the user when either using the hammer head 15 or the claw 20. The handle 25 will be also gripped by the user when the device 10 is operated as a cable straightening device.

The device 10 includes a cable straightener 30. The cable straightener 30 is attached to the handle 25 and extends along the length of the handle 25. The cable straightener 30 may be attached to the handle 25 using clips, or screws. In other words, the cable straightener 30 may be removable from device 10 if the user of the device 10 wishes to use device 10 in a traditional hammer arrangement. This provides flexibility to the user. Alternatively, the cable straightener 30 may be integrated into the handle 25 by welding the cable straightener 30 in place, or by forming the handle 25 and cable straightener 30 as one moulded piece. This provides greater strength to the device 10.

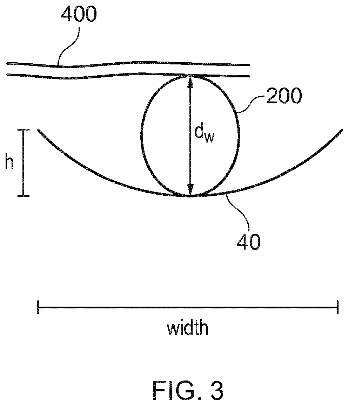

The cable straightener 30 is U-shaped. The cross-section of the cable straightener 30 will be described in more detail with reference to Figure 3.

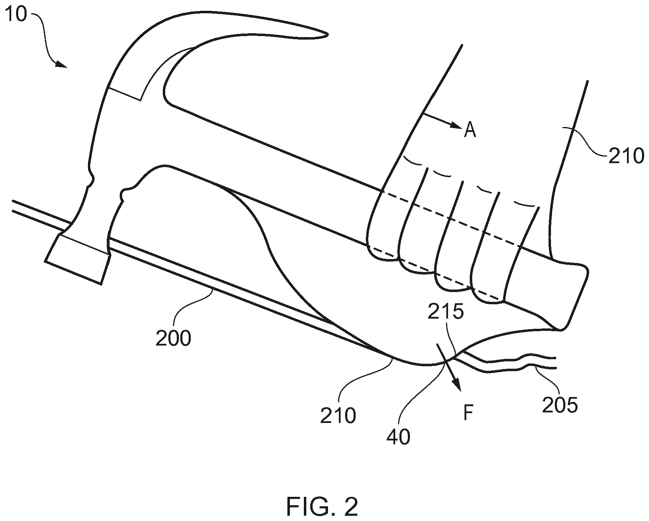

The cable straightener 30 has a bend 40. This bend 40 engages with the cable and acts to straighten the cable. This will be explained with reference to Figure 2.

Referring to Figure 2, the user 210 is straightening cable 205. The user is moving the cable straightener 30 in the direction of arrow A. The cable engages with the cable straightener 30 at point 215. In other words, the cable 205 engages with the cable straightener 30 before the bend 40 in the direction of travel of the cable straightener 30. The user is applying a force in direction F to straighten the cable 205. Specifically, the user 210 applies a force F to the cable 205 at the point of the bend 40. The direction of the force F has two components. The first, and largest, component is against the surface upon which the cable is mounted. The second, and smallest, component is in the direction of travel of the cable straightener 30. This force at bend 40 acts to straighten the cable.

The angle of the bend 40 can be any angle. In embodiments, the cable straightener 30 may have many bends located along its length. Each of these difference bends may be at different angles. This selection of different angled bends allows the user to select the most appropriate bend to use to straighten the cable. Alternatively, or additionally, the angle of bend 40 may be tapered. This allows the user to select to which part of the bend 40 to apply the straightening force. In embodiments, the angle of the bend 40 used to straighten the cable is such that when the force is applied by the user, the bend 40 is perpendicular to the desired direction of the force being applied by the user.

The straightened cable then disengages from the cable straightener at point 210 which is after the bend 40 in the direction of travel of the cable straightener 30.

Referring to Figure 3, the cable 200 having a diameter d_{w} is pressed between the cable straightener 30 and the wall 400 (or other surface onto which the cable is being fixed). In the specific embodiment shown in Figure 3, this cross section is taken at the bend 40.

The cable straightener 30 has a U-shape cross section. This allows the cable 200 to sit within the U-shape and be guided along the cable straightener 30. By guiding the cable along the cable straightener 30 makes it simpler for the user as the user does not need to keep realigning the cable. In order for the cable to sit within the U-shape, the width of the cable straightener 30 is, in embodiments, between 10mm and 50mm so as to engage with most cables. It should be noted that the width of the cable straightener 30 may vary and may be different to these values, for example may be between 0mm to 100mm. In embodiments, the cable straightener 30 is wider than the diameter of the cable 200 so that the cable sits within the U-shape. In other words, in embodiments, the width is greater than d_{w}.

The height, h, of the cable straightener 30 is, in embodiments, between 10mm and 30mm. However, the invention is not so limited and may be any height between 0mm and 100mm. This is so that the cable straightener 30 will engage with most cabling. It should be noted that the height of the cable straightener 30 may vary and may be different to these values. In embodiments, the height of the cable straightener 30 is less than or equal to the diameter of the cable. If the height of the cable straightener 30 was greater than the diameter of the cable, the cable straightener 30 would press against surface 400. This means that the surface 400 may be marked by the cable straightener 30 and also when the user applies the force to straighten the cable, the user will apply the force to the surface upon which the cable will be mounted rather than to the cable itself.

The width and/or height of the cable straightener 30 may vary over at least part of the length of the cable straightener 30. This enables the cable straightener 30 to be used with cables of different thicknesses and strengths and therefore provides flexibility to the user of the cable straightener 30.

In one embodiment, the width of the cable straightener 30 will taper inwards towards the bend 40. This means that the U-shape of the cable straightener 30 will be wider at point 215 in Figure 2 than at the bend 40. This allows the cable 200 to be more easily fed into the cable straightener 30 and the motion of the user's hand would pull the cable into the alignment. The width of the cable straightener 30 will, in embodiments, taper outwards from bend 40 in the direction of travel of the cable straightener 30. In other words, the width of the U-shape will be wider at point 210 in Figure 2 than bend 40. This is because the guiding nature of the cable straightener 30 is not required after straightening. Also, this allows the cable straightener 30 to be used equally by left and right handed individuals, as the direction of motion in use will differ between left and right handed users.

Further, the height, h, of the cable straightener 30 may reduce near bend 40. This allows the cable straightener 30 to be used with cables or wires with a smaller diameter d_{w}. In other words, the height of the U-shape of the cable straightener 30 will be larger at point 215 in Figure 2 than at the bend 40. This allows the cable 200 to be more easily fed into the cable straightener 30 and the motion of the user's hand would pull the cable into the alignment. The height of the cable straightener 30 will, in embodiments, become larger from bend 40 in the direction of travel of the cable straightener 30. In other words, the height, h, of the U-shape will be larger at point 210 in Figure 2 than bend 40. This is because the guiding nature of the cable straightener 30 is not required after straightening. In fact, it is useful to have a small height near the bend 40 as this reduces the risk of catching the surface upon which the cable is to be mounted when the user applies the force to the device 10. Further, and as noted above, having a smaller height near the bend 40 means that cables with a smaller diameter may be used as the user applies force to the cable at the bend 40.

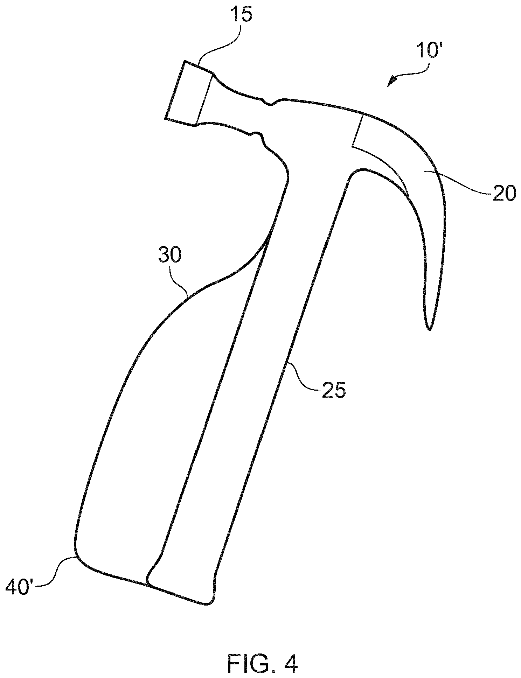

A device 10' according to another embodiment is shown in Figure 4. Like reference numerals in Figure 4 refer to like elements in Figure 1. In fact, the only difference between the device 10' of Figure 4 and the device 10 of Figure 1 is the position and therefore angle of bend 40'. The position of bend 40' is further along the handle than bend 40 in Figure 1. Further the angle of bend 40' is higher than the angle of bend 40. This combination enables the device 10' to be used when straightening cables in corners. In particular, by locating the bend 40' towards the end of the handle 25 allows the bend to fit into a corner. Of course, bend 40' could be incorporated into the device 10 of Figure 1 as an additional bend.

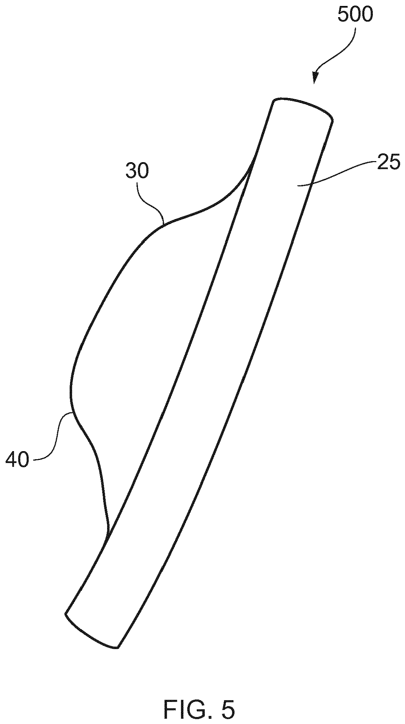

Figure 5 shows a device 500 according to a third embodiment. This embodiment is essentially the same as the first and second embodiment with the difference being that there is no hammerhead 15 or claw 20. As can be seen from Figure 5, a handle 25 has a cable straightener 30 and a bend 40. This reduces the weight of the device 500 compared with that of the first or second embodiments.

It should be noted that the device of any of the first, second or third embodiments may be made of any material. For example, the device of any of the first, second or third embodiments may be made from metal, plastic, or alloy. If made of an electrical conducting material, any of the first, second or third embodiments may be coated in insulation. This insulation may cover the entire device with the exception of the hammerhead 15 and the claw 20. The hammerhead 15 and claw 20 will not be covered in insulation to ensure that the operation of these areas remains unaffected. This insulation may be PVC or nylon or any kind of electrical and/or heat insulator. Also, it may be that the bends 40 or 40' may have a thicker deposit of insulation than the remaining parts of the device 10 or 10' respectively. This is because more force is applied to bend 40 or 40' and so will wear the insulation down more quickly. Further, as more force is applied at bend 40 or 40', the cable may fracture during the application of the force. This means that insulation needs to be provided more reliably at this point.

Although the foregoing has referred to circular cables, the same principles apply to any kind of wire. Further the above embodiments may be adapted for use with any shape of wire and/or cable. For example, elliptical shaped wire and/or cable such as dual core cable used in homes.

Although the foregoing has been described with the cable straightener 30 as extending along the whole length of the handle, the invention is not so limited. The cable straightener 30 may extend only along a part of the handle.

Although the foregoing has been described with reference one bend on the cable straightener 30, the invention is not limited to this. In fact, any number of bends may be provided on one cable straightener 30. Further, any number of cable straighteners 30 may be provided on a handle or hammer.

Further, the foregoing cable straighteners 30 have been described as being integral with a handle. Although not part of the invention, in fact, the cable straightener 30 may comprise means to connect to a handle. In other words, the cable straightener 30 may be manufactured and sold to include a fastening means such as a clipping mechanism or a hole in which a screw can be placed to fix the cable straightener 30 to a known handle or hammer. The cable straightener 30 may then be manufactured and sold without a handle and simply attached to a user's existing device.

Although the foregoing has been described with reference to cables, it will be appreciated that the same principles may be applied to a pipe. Although the term "pipe" is used, a pipe in this instance encompasses a tube or conduit. For example, the straightening device may be used to straighten or guide a microbore pipe used in a central heating system or the like.

## Claims

1. A device for straightening cables comprising a cable straightening means (30), wherein the cable straightening means (30) extends along at least part of a handle (25) to which the cable straightening means (30) is attached and has at least one bend (40) wherein the bend is configured to engage a cable to be straightened (205), **characterised by** a hammerhead (15) attached to one end of the handle.

2. A device according to claim 1 wherein the cable straightening means has a U-shaped cross section, wherein the U-shaped cross section is configured to locate the cable therein.

3. A device according to claim 2, wherein the width of the U-shaped cross section varies along at least part of the cable straightening means and is whose width tapers inwards towards the bend.

4. A device according to any preceding claim, comprising electrical insulation covering the handle and the cable straightening means.

5. A device according to claim 4, wherein the electrical insulation is thicker on the bend of the cable straightening means compared to the remainder of the cable straightening means.

6. A device according to either claim 4 or 5, wherein the electrical insulation is PVC or nylon.

7. A device according to any preceding claim, wherein the width of the U-shaped cross section at the bend is between 10-50mm.

8. A device according to any preceding claim, wherein the height of the U-shaped cross section is between 10-30mm.

9. A device according to any preceding claim, wherein the bend is located towards the end of the handle.

10. A device according to any preceding claim, wherein the cable straightening means is moulded into the handle.

11. A device according to any one of claims 1 to 10, comprising a fastening means operable to engage with the handle to attach the device to the handle.

12. A device for straightening pipes comprising a pipe straightening means, wherein the pipe straightening means extends along at least part of a handle to which the pipe straightening means is attached and has at least one bend wherein the bend is configured to engage a pipe to be straightened, **characterized by** a hammerhead (15) attached to one end of the handle.

## Patentansprüche

1. Einrichtung zum Richten von Kabeln, umfassend ein Kabelrichtmittel (30), wobei sich das Kabelrichtmittel (30) entlang mindestens eines Teils eines Griffs (25) erstreckt, an dem das Kabelrichtmittel (30) angebracht ist, und mindestens eine Biegung (40) besitzt, wobei die Biegung konfiguriert ist zur Ineingiffnahme eines zu richtenden Kabels (205), **gekennzeichnet durch** einen an einem Ende des Griffs angebrachten Hammerkopf (15).

2. Einrichtung nach Anspruch 1, wobei das Kabelrichtmittel einen U-förmigen Querschnitt besitzt, wobei der U-förmige Querschnitt konfiguriert ist zum Lokalisieren des Kabels darin.

3. Einrichtung nach Anspruch 2, wobei die Breite des U-förmigen Querschnitts entlang mindestens eines Teils des Kabelrichtmittels variiert und dessen Breite sich nach innen zur Biegung verjüngt.

4. Einrichtung nach einem vorhergehenden Anspruch, umfassend eine elektrische Isolation, die den Griff und das Kabelrichtmittel bedeckt.

5. Einrichtung nach Anspruch 4, wobei die elektrische Isolation an der Biegung des Kabelrichtmittels im Vergleich zum Rest des Kabelrichtmittels dicker ist.

6. Einrichtung nach Anspruch 4 oder 5, wobei die elektrische Isolation PVC oder Nylon ist.

7. Einrichtung nach einem vorhergehenden Anspruch, wobei die Breite des U-förmigen Querschnitts an der Biegung zwischen 10-50 mm liegt.

8. Einrichtung nach einem vorhergehenden Anspruch, wobei die Höhe des U-förmigen Querschnitts zwischen 10-30 mm liegt.

9. Einrichtung nach einem vorhergehenden Anspruch, wobei sich die Biegung zum Ende des Griffs hin befindet.

10. Einrichtung nach einem vorhergehenden Anspruch, wobei das Kabelrichtmittel in den Griff eingeformt ist.

11. Einrichtung nach einem der Ansprüche 1 bis 10, umfassend ein Befestigungsmittel, das betätigt werden kann zur Ineingriffnahme mit dem Griff, um die Einrichtung an dem Griff zu befestigen.

12. Einrichtung zum Richten von Röhren, umfassend ein Röhrenrichtmittel, wobei sich das Röhrenrichtmittel entlang mindestens eines Teils eines Griffs erstreckt, an dem das Röhrenrichtmittel angebracht ist, und mindestens eine Biegung besitzt, wobei die Biegung konfiguriert ist zur Ineingriffnahme einer zu richtenden Röhre, **gekennzeichnet durch** einen an einem Ende des Griffs angebrachten Hammerkopf (15).

## Revendications

1. Dispositif de redressement de câbles comprenant un moyen de redressement de câble (30), le moyen de redressement de câble (30) s'étendant le long d'au moins une partie d'un manche (25) auquel est fixé le moyen de redressement de câble (30) et comportant au moins un coude (40), le coude étant configuré pour venir en prise avec un câble à redresser (205), **caractérisé par** une tête de marteau (15) fixée à une extrémité du manche.

2. Dispositif selon la revendication 1, dans lequel le moyen de redressement de câble présente une section transversale en forme de U, dans lequel la section transversale en forme de U est configurée pour positionner le câble dans celle-ci.

3. Dispositif selon la revendication 2, dans lequel la largeur de la section transversale en forme de U varie le long d' au moins une partie du moyen de redressement de câble et présentant une largeur décroissant en direction du coude.

4. Dispositif selon l'une quelconque des revendications précédentes, comprenant une isolation électrique recouvrant le manche et le moyen de redressement de câble.

5. Dispositif selon la revendication 4, dans lequel l'isolation électrique est plus épaisse sur le coude du moyen de redressement de câble par comparaison avec le reste du moyen de redressement de câble.

6. Dispositif selon la revendication 4 ou 5, dans lequel l'isolation électrique est faite de PVC ou de nylon.

7. Dispositif selon l'une quelconque des revendications précédentes, dans lequel la largeur de la section transversale en forme de U au niveau du coude est comprise entre 10 et 50 mm.

8. Dispositif selon l'une quelconque des revendications précédentes, dans lequel la hauteur de la section transversale en forme de U est comprise entre 10 et 30 mm.

9. Dispositif selon l'une quelconque des revendications précédentes, dans lequel le coude est situé vers l'extrémité du manche.

10. Dispositif selon l'une quelconque des revendications précédentes, dans lequel le moyen de redressement de câble est moulé dans le manche.

11. Dispositif selon l'une quelconque des revendications 1 à 10, comprenant un moyen de fixation pouvant être mis en oeuvre pour venir en prise avec le manche afin de fixer le dispositif au manche.

12. Dispositif de redressement de tuyaux comprenant un moyen de redressement de tuyau, le moyen de redressement de tuyau s'étendant le long d'au moins une partie d'un manche auquel est fixé le moyen de redressement de tuyau et comportant au moins un coude, le coude étant configuré pour venir en prise avec un tuyau à redresser, **caractérisé par** une tête de marteau (15) fixée à une extrémité du manche.
